(19) Europäisches Patentamt
European Patent Office
Office européen des brevets

(11) **EP 2 345 007 B1**

(12) **FASCICULE DE BREVET EUROPEEN**

(45) Date de publication et mention
de la délivrance du brevet:
**12.02.2014   Bulletin 2014/07**

(51) Int Cl.:
***G06T 11/00*** *(2006.01)*

(21) Numéro de dépôt: **09748413.3**

(22) Date de dépôt: **18.09.2009**

(86) Numéro de dépôt international:
**PCT/FR2009/051764**

(87) Numéro de publication internationale:
**WO 2010/046573 (29.04.2010 Gazette 2010/17)**

(54) **PROCÉDÉ D'ESTIMATION DE LA CONCENTRATION D'UN TRACEUR DANS UN ENSEMBLE DE STRUCTURES TISSULAIRES, SUPPORT D'INFORMATION ET DISPOSITIF CORRESPONDANTS**

VERFAHREN ZUR SCHÄTZUNG DER KONZENTRATION EINES TRACERS IN EINER GEWEBESTRUKTUR UND ENTSPRECHENDES SPEICHERMEDIUM UND EINRICHTUNG

METHOD FOR ESTIMATING THE CONCENTRATION OF A TRACER IN A TISSUE STRUCTURE ASSEMBLY, AND CORRESPONDING STORAGE MEDIUM AND DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité:  **24.10.2008   FR 0857251**

(43) Date de publication de la demande:
**20.07.2011   Bulletin 2011/29**

(73) Titulaire: **Commissariat à l'Énergie Atomique et aux Énergies Alternatives 75015 Paris (FR)**

(72) Inventeurs:
• **MAROY, Renaud**
**F-75015 Paris (FR)**
• **TAVITIAN, Bertrand**
**F-75015 Paris (FR)**

(74) Mandataire: **Domenego, Bertrand Cabinet Lavoix 2, place d'Estienne d'Orves 75441 Paris Cedex 09 (FR)**

(56) Documents cités:
• MAROY ET AL: "Fast and accurate PET preclinical data analysis: Segmentation and Partial Volume Effect correction with no anatomical priors" NUCLEAR SCIENCE SYMPOSIUM CONFERENCE RECORD, 2008. NSS '08. IEEE (19-25 OCT. 2008),, 19 octobre 2008 (2008-10-19), pages 5498-5501, XP009115724 ISBN: 978-1-4244-2714-7
• FROUIN VINCENT ET AL: "Correction of Partial-Volume Effect for PET Striatal Imaging: Fast Implementation and Study of Robustness" JOURNAL OF NUCLEAR MEDICINE, SOCIETY OF NUCLEAR MEDICINE, RESTON, VA, US, vol. 43, no. 12, 1 décembre 2002 (2002-12-01), pages 1715-1726, XP007908289 ISSN: 0161-5505 cité dans la demande
• MAROY R ET AL: "Segmentation of Rodent Whole-Body Dynamic PET Images: An Unsupervised Method Based on Voxel Dynamics" IEEE TRANSACTIONS ON MEDICAL IMAGING, IEEE SERVICE CENTER, PISCATAWAY, NJ, US, vol. 27, no. 3, 1 mars 2008 (2008-03-01), pages 342-354, XP011202052 ISSN: 0278-0062 cité dans la demande
• OLIVIER ROUSSET ET AL: "Partial Volume Correction Strategies in PET" PET CLINICS, vol. 2, no. 2, 2007, pages 235-249, XP002525044 Elsevier Inc.

**Description**

La présente invention concerne un procédé d'estimation de la concentration d'un traceur dans un ensemble de structures tissulaires comprenant au moins une structure tissulaire à partir d'une image de mesure de la concentration du traceur dans ledit ensemble de structures tissulaires obtenue par un appareil d'imagerie, l'image comprenant au moins un domaine spatial à l'intérieur duquel la concentration du traceur est homogène et au moins une région d'intérêt à l'intérieur de laquelle la concentration du traceur est mesurée.

L'imagerie moléculaire in vivo permet de mesurer des paramètres biochimiques et pharmacologiques locaux de manière non invasive dans des animaux et êtres humains intacts. L'imagerie moléculaire englobe des techniques nucléaires, l'imagerie par résonance magnétique (IRM) et des techniques optiques. Parmi les techniques nucléaires, la tomographie par émission de positrons (TEP) est la technique la plus sensible et la seule à offrir des mesures quantitatives.

La quantification des mesures avec la TEP pour l'étude d'un médicament nécessite l'injection intraveineuse d'un traceur radioactif adapté à l'étude de ce médicament. Une image de la distribution du traceur est alors reconstruite. Les courbes d'activité temporelle (TAC pour Time Activity Curve), c'est-à-dire les variations de la concentration du traceur à l'intérieur d'un élément de volume, sont également fortement corrélées spatialement du fait non seulement du procédé de reconstruction mais également de l'existence de régions physiologiques qui répondent au traceur de façon identique, régions qui peuvent être appelées des pharmaco-organes.

Le post-traitement de l'image TEP requiert en général trois étapes pour accéder au paramètre pharmacologique. Tout d'abord, des régions d'intérêt (ROI pour Region Of Interest) délimitant les organes, plus précisément les organes pharmacocinétiques, doivent être définis soit sur l'image TEP soit sur une image de modalité haute résolution mise en correspondance point à point avec l'image TEP. Ensuite, les TACs des pharmaco-organes doivent être extraites et éventuellement corrigées pour compenser la résolution spatiale limitée de la TEP. Enfin, un modèle physiologique peut être défini, sur la base des TACs et de la  concentration du traceur dans le plasma, permettant le calcul des paramètres pharmacologiques intéressants pour le biologiste. Une délinéation précise des ROIs est nécessaire afin d'extraire des TACs pertinentes.

Cependant, la quantification des TACs est entravée par la résolution limitée du système TEP, résultant en ce que l'on appelle l'effet de volume partiel (PVE pour Partial Volume Effect).

On connaît un procédé par matrice de transfert géométrique (GTM pour Geometric Matrix Transfer) permettant de corriger le PVE de manière efficace. Ce procédé nécessite la donnée de l'image TEP d'une part, et d'autre part de domaines spatiaux délinéant les organes fonctionnels, de régions d'intérêt au sein desquelles les TACs moyennes des organes fonctionnels seront calculées et d'un modèle de résolution de l'imageur TEP.

Cependant, ce procédé GTM est très sensible non seulement aux erreurs de délinéation desdits domaines spatiaux et aux artefacts de reconstruction de l'image, mais également aux effets de lissage de l'image dus à des mouvements physiologiques périodiques, tels que les battements du coeur ou encore les mouvements respiratoires.

L'invention a pour but de proposer un procédé permettant de limiter l'impact des effets dus aux erreurs de segmentation, aux artefacts de reconstruction de l'image et aux mouvements physiologiques sur l'efficacité du procédé GTM afin d'obtenir des TACs présentant le moins de biais avec la plus faible incertitude due au bruit.

A cet effet, l'invention a pour objet un procédé selon l'une quelconque des revendications 1-15.

L'invention a également pour objet un support d'information selon la revendication 16.

L'invention a en outre pour objet un dispositif destiné à estimer la concentration d'un traceur dans un ensemble de structures tissulaires selon la revendication 17.

L'invention sera mieux comprise à la lecture de la description qui va suivre, donnée uniquement à titre d'exemple et faite en se référant aux dessins annexés, sur lesquels :

-    la Figure 1 est un organigramme représentant les deux phases principales du procédé selon l'invention ;
-    la Figure 2 est un schéma illustrant l'image TEP d'une souris ;
-    la Figure 3 est un organigramme représentant les étapes du procédé selon l'invention ;
-    les Figures 4 et 5 sont des coupes respectivement transaxiale et longitudinale du champ de vue du scanner TEP ;
-    la Figure 6 est un organigramme représentant plus en détail l'étape de délimitation des régions d'intérêt ; et
-    les Figures 7A à 11B sont des schémas présentant les résultats obtenus avec un exemple de réalisation du procédé selon l'invention.

La présente invention se base sur le procédé par matrice de transfert géométrique (GTM) de correction de l'effet de volume partiel (PVE) proposé par Rousset et al. dans l'article « Correction for Partial Volume Effects in PET : Principle and Validation », The Journal of Nuclear Medicine, 1998, Vol. 39, No. 5,  pages 904 à 911, et implémenté dans l'espace image par Frouin et al. dans l'article « Correction of Partial-Volume Effect for PET Striatal Imaging : Fast Implementation and Study of Robustness », The Journal of Nuclear Medicine, 2002, Vol. 43, No. 12, pages 1715 à 1726.

Le but du procédé GTM est de retrouver la vraie concentration $T_i$ du traceur au sein de domaines spatiaux $D_i$.

Les détails du procédé GTM peuvent être trouvés dans l'article de Rousset et al. précité, mais les principes en sont présentés ici afin de mettre en avant les caractéristiques de la présente invention.

Le procédé selon l'invention a pour but d'optimiser les paramètres de calcul de la vraie concentration $T_i$ du traceur en limitant les effets dus aux erreurs de segmentation, aux artefacts de reconstruction de l'image et aux mouvements physiologiques.

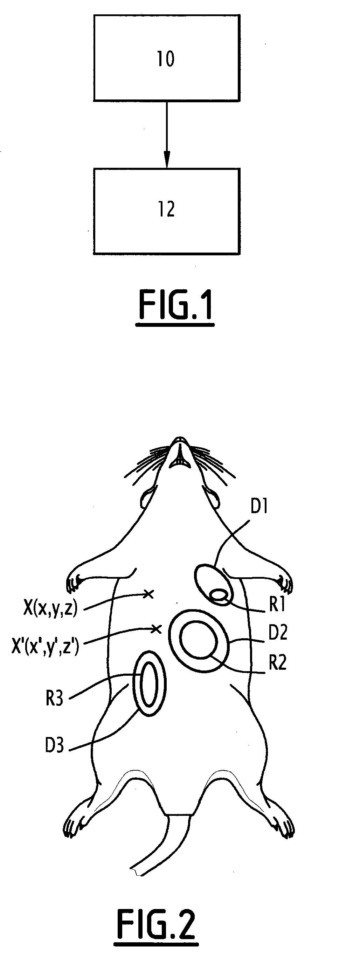

Comme représenté sur la Figure 1, le procédé selon l'invention comprend deux phases principales :

- une première phase 10 destinée à choisir la fonction de réponse du scanner TEP de manière adéquate ; et
- une deuxième phase 12 destinée à choisir les régions d'intérêt optimales pour l'estimation de la vraie concentration $T_i$ du traceur.

En référence à la Figure 2, l'image TEP est une image tridimensionnelle formée d'un ensemble de voxels X(x, y,z) chacun caractérisé par une concentration de traceur A(x,y,z), cette concentration étant susceptible de varier au cours du temps.

L'image TEP est supposée être composée de I domaines spatiaux homogènes $\{D_i\}_{1 \leq i \leq I}$ en termes de concentration de traceur. Chaque domaine spatial $D_i$ a une vraie concentration de traceur notée $T_i$.

Une concentration de traceur $\{t_j\}_{1 \leq j \leq J}$ est mesurée dans l'image TEP au sein de régions d'intérêt (ROI) $\{R_j\}_{1 \leq j \leq J}$.

Pour des raisons de clarté de l'explication, nous considérerons dans la suite que chaque ROI est incluse dans le domaine spatial correspondant et que leur nombre sont égaux : J = I.

En variante, J est différent de I, avec de préférence J ≥ I pour que le procédé GTM permette de retrouver la vraie concentration $T_i$ du traceur.

La concentration de traceur mesurée $t_j$ dans une région d'intérêt $R_j$, de volume $V_j$, peut être exprimée comme une combinaison linéaire des concentrations du traceur $\{T_i\}_{1 \leq i \leq I}$ dans les différents domaines spatiaux :

$$t_j = \frac{1}{V_j} \sum_{i=1}^{I} T_i \times \int_{R_j} RSF_i(x)dx \qquad (1)$$

où $RSF_i(x)$ est la contribution du domaine spatial $D_i$ à la mesure TEP de la concentration du traceur dans le voxel x.

Cette équation peut être réécrite sous forme matricielle :

$$t = W.T \qquad (2)$$

où t est le vecteur des mesures TEP de concentration du traceur moyennées dans les ROIs $R_j$, T est le vecteur des vraies concentrations du traceur dans les domaines spatiaux $D_i$ et W est la matrice de transfert géométrique (GTM) I × J entre les domaines spatiaux $\{D_i\}_{1 \leq i \leq I}$ et les ROIs $\{R_j\}_{1 \leq j \leq J}$.

Les coefficients $w_{i,j}$ de la matrice W sont égaux à :

$$w_{i,j} = \frac{1}{V_j} \int_{R_j} RSF_i(x)dx \qquad (3)$$

La vraie concentration du traceur peut alors être calculée comme :

$$T = W^{-1}.t \qquad (4)$$

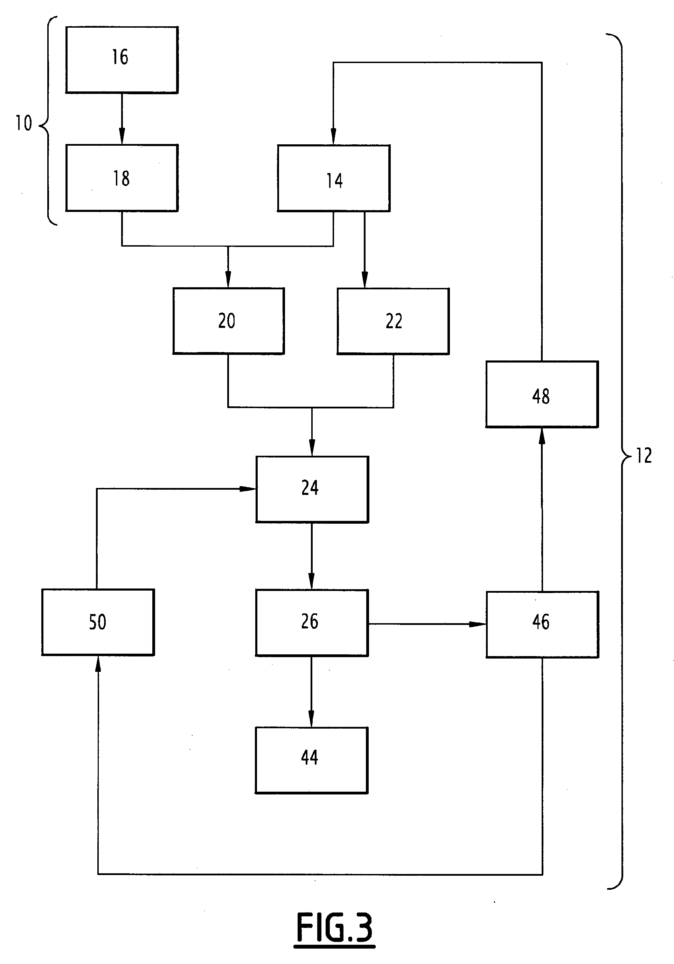

Comme illustré sur la Figure 3, une étape initiale 14 de la phase 12 du procédé selon l'invention consiste à délimiter les domaines spatiaux $D_i$.

L'utilisateur est libre de délimiter les $D_i$ comme il le souhaite, en les traçant manuellement, semi-automatiquement ou automatiquement sur l'image TEP, mais sous la contrainte que chaque domaine spatial $D_i$ soit homogène en termes de vraie concentration du traceur, cette concentration pouvant varier au cours du temps dans le cas où l'image TEP contient une information dynamique.

En variante, les $D_i$ sont tracés sur une image provenant d'une autre modalité d'imagerie, telle que l'IRM nucléaire ou encore le scanner X.

Parallèlement, la phase 10 de choix de la fonction de réponse du scanner TEP est mise en oeuvre.

La fonction de réponse du scanner, ou fonction d'étalement du point (PSF pour Point Spread Function), est de préférence estimée pour que le procédé GTM fonctionne efficacement.

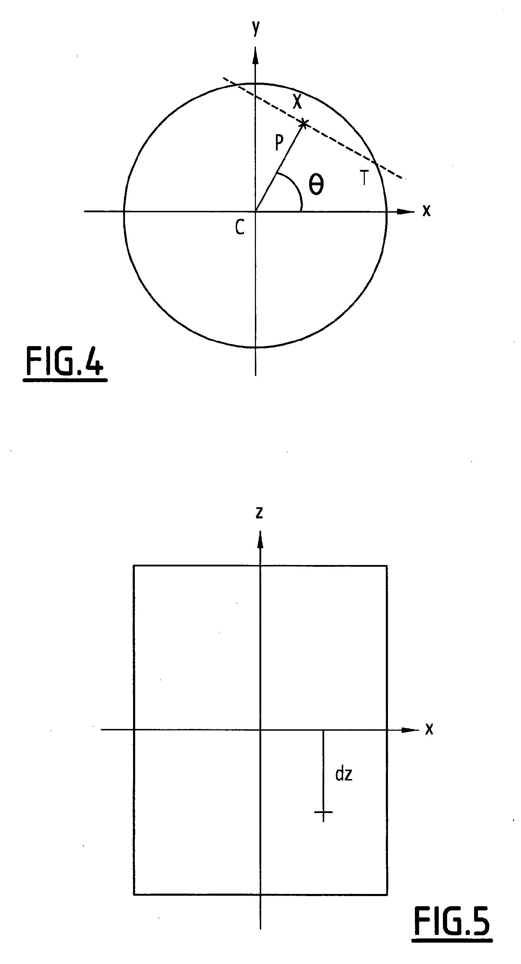

En référence aux Figures 4 et 5, la PSF est décomposée dans un système de coordonnées cylindriques ($\rho,\theta$, z) en :

- une composante axiale le long de l'axe z : $PSF_{axiale}$ ;
- une composante radiale dans la direction CX : $PSF_{radiale}$ ; et
- une composante tangentielle dans la direction XT : $PSF_{tangentielle}$.

Les composantes $PSF_{axiale}$, $PSF_{radiale}$ et $PSF_{tangentielle}$ de la PSF peuvent comprendre chacune plusieurs paramètres, par exemple deux variances de deux gaussiennes si la PSF est estimée par deux gaussiennes, ou plusieurs valeurs.

Si l'on suppose que la PSF est invariante selon z, il n'est nécessaire de mesurer la PSF que sur le plan transaxial passant par le milieu du scanner TEP. Selon cette hypothèse, $PSF_{axiale}$ ne varie pas avec la position dans le champ de vue, et de plus $PSF_{radiale}$ et $PSF_{tangentielle}$ sont invariantes selon $\theta$. Il suffit donc de mesurer $PSF_{axiale}$ en un point du champ de vue, et $PSF_{radiale}$ et $PSF_{tangentielle}$ en plusieurs points de l'axe x.

Si l'on suppose que la PSF varie lorsqu'on se déplace dans la direction de l'axe du scanner TEP, il est nécessaire de mesurer $PSF_{axiale}$ en plusieurs points de l'axe z, et $PSF_{radiale}$ et $PSF_{tangentielle}$ en plusieurs points de l'axe x.

En référence à la Figure 3, une première étape 16 de la phase 10 du procédé selon l'invention consiste à mesurer $PSF_{axiale}$, $PSF_{radiale}$ et $PSF_{tangentielle}$ en plusieurs points du champ de vue du scanner TEP.

Selon l'invention, la PSF peut avoir une forme paramétrique ou non paramétrique quelconque, ou plus précisément une forme présentant une bonne adéquation avec la forme de PSF générée par le procédé de reconstruction de l'image TEP, et éventuellement également avec l'effet de lissage opéré par les mouvements physiologiques. Si l'image TEP est reconstruite avec modélisation ou compensation de la PSF, la PSF dans le cadre de cette présente invention modélisera les effets résiduels non pris en compte lors de la reconstruction (par exemple si la reconstruction suppose la PSF uniforme dans le champ de vue, alors l'écart pour chaque point ou région du champ de vue entre la PSF uniforme et la PSF réelle sera modélisé).

Dans une deuxième étape 18 de la phase 10, on déduit de ces mesures la valeur de $PSF_{axiale}$, $PSF_{radiale}$ et $PSF_{tangentielle}$ en tout point du champ de vue par interpolation et/ou par extrapolation, par une méthode au choix de l'utilisateur.

Comme vu précédemment, $PSF_{axiale}$ ne dépend que de la position sur l'axe z et sera noté $PSF_{axiale}(z)$, alors que $PSF_{radiale}$ et $PSF_{tangentielle}$ ne dépendent que de $\rho$ et seront donc notées $PSF_{radiale}(\rho)$ et $PSF_{tangentielle}(\rho)$.

A l'étape 20 du procédé selon l'invention, on estime la $RSF_i(x)$ en tout point du champ de vue.

Cette estimation est obtenue par convolution du masque de convolution correspondant à la PSF avec les voxels du domaine spatial $D_i$.

Le masque de convolution correspondant à la PSF du scanner TEP est obtenu de la façon suivante :

Soient C = $(x_c y_c)$ et X = (x,y,z) respectivement les coordonnées de l'axe du scanner et celles d'un voxel situé dans le champ de vue du scanner.

Soit $\delta X = (\delta x, \delta y, \delta z)$ un petit déplacement autour de X.

La valeur en X + $\delta X$ du masque de convolution correspondant à la PSF en X est donnée par :

$$PSF_{x,y,z}(\delta x, \delta y, \delta z) = f\left(\delta r, PSF_{radiale}(\rho), \delta t, PSF_{tangentielle}(\rho), z, PSF_{axiale}(z)\right) \qquad (5)$$

où

$$\delta r = \delta x \cos\theta + \delta y \sin\theta \; ,$$

$$\delta\! t = -\delta\! x \sin\theta + \delta\! y \cos\theta \ ,$$

$$\cos\theta = (x - x_c)/\|X - C\| \ ,$$

$$\sin\theta = (y - y_c)/\|X - C\| \ ,$$

et f est la fonction représentant l'allure de la PSF.

$RSF_i(x)$ est obtenue en appliquant le masque de convolution $PSF_{x,y,z}(\delta x, \delta y, \delta z)$ au masque de $D_i$. Ce lissage est non homogène et reproduit les effets produits par l'acquisition et la reconstruction de l'image.

On définit parallèlement, à l'étape 22, un ensemble $\Lambda_i$ de voxels dont l'activité mesurée dans leur voisinage est représentative de la concentration de traceur dans le domaine spatial $D_i$. Ces voxels peuvent être déterminés de manière automatique ou de manière manuelle.

On définit également Si comme un ensemble de voxels à exclure des régions d'intérêt $R_j$.

Un ordonnancement des voxels dans chaque domaine spatial $D_i$ est alors réalisé à l'étape 24 selon le principe suivant.

Au moins un voxel $x \in D_i$ est affecté par les effets qui lissent les images (effet de volume partiel, fraction des tissus dans le voxel, mouvement physiologiques, etc.).

Il est possible de prédire, avec ou sans introduction d'information a priori, dans quelle proportion ce voxel x est affecté par ces effets à partir d'un ou plusieurs critères d'ordre prédéterminés.

Parmi ces critères :

- critère $\alpha(x)$ : le voxel x est affecté par l'effet de volume partiel, la fraction tissulaire ou les mouvements physiologiques périodiques du sujet, ce critère permettant de définir en d'autres termes si l'activité contenue dans le voxel x provient d'un seul ou de plusieurs domaines spatiaux différents ;
- critère $\beta(x)$ : le voxel x participe au calcul des éléments non diagonaux de la matrice W, ce critère pouvant aisément être calculé à partir du calcul des $RSF_k(x)$ pour $k \neq i$ ;
- critère $\gamma(x)$ : tout autre critère ou ensemble de critères pouvant aider à discriminer les voxels les plus fiables pour l'estimation de la concentration du traceur (fiabilité de la mesure TEP, homogénéité de réponse au sein d'un même organe, etc.), par exemple issu d'un atlas probabiliste.

Les critères $\alpha(x)$, $\beta(x)$ et $\gamma(x)$ sont définis de telle manière que plus ils sont petits et moins l'agrégation de x à la région d'intérêt $R_i$ va introduire d'erreur de correction due aux erreurs de segmentation ou aux effets non pris en compte dans l'estimation de la PSF.

Soit $g_i(\alpha(x), \beta(x), \gamma(x), \Lambda_i, Si)$ un ordre des voxels $x \in D_i$ donnant à x un rang d'autant plus faible que $\alpha(x)$, $\beta(x)$ et $\gamma(x)$ sont petits, sous la contrainte que :

(C1) Un voxel $x \in D_i$ de rang n est connecté par des voxels de rang inférieur à l'un des points de $\Lambda_i$ ; et
(C2) Les voxels $y \in S_i$ sont exclus de cet ordre de tri.

Dans la suite, $R_i^{(n)}$ désignera une ROI contenant les n voxels de rangs $g_i(\alpha(x), \beta(x), \gamma(x))$ les plus petits parmi tous les voxels de $D_i$ ou une partie de ces voxels.

$R_i^{(n)}$ peut également contenir des voxels situés en dehors de $D_i$ mais à sa périphérie.

L'optimisation automatique des régions d'intérêt $R_j$ est ensuite effectuée à l'étape 26 du procédé selon l'invention suivant une boucle itérative.

On définit tout d'abord les paramètres utiles pour l'optimisation automatique des régions d'intérêt $R_j$.

Soit $R'_i \subset R_i$, soit $\hat{T}'$ et $\hat{T}$ les concentrations du traceur estimées dans les organes respectivement avec $R'_i$ et avec $R_i$. Soit T la vraie concentration du traceur. On peut avancer que :

- Les erreurs dues aux erreurs de segmentation sur l'estimation de T en utilisant $R'_i$ sont moins importantes que celles commises en utilisant $R_i$. De plus, la matrice de transfert géométrique W' estimée en utilisant $R'_i$ est plus proche de la matrice unité que la matrice de transfert géométrique W estimée en utilisant $R_i$. Le conditionnement de la matrice W' est meilleur que celui de W.

- Les erreurs dues au bruit commises sur l'estimation de T en utilisant $R'_i$ sont plus importantes que celles commises en utilisant $R_i$.
- Il est possible d'estimer $T_{i,k,\tau}$, qui est la concentration du traceur dans la région d'intérêt $R_i$ pour l'itération k et le temps de mesure $\tau$ :
- soit en optimisant $R_i$ globalement en intégrant l'information de tous les temps de mesure (dénommés « frames » dans la suite) ;
- soit en optimisant $R_i$ séparément pour chaque frame $\tau$ ;
- soit en optimisant $R_i$ séparément pour chaque frame $\tau_{opt}$ tout en intégrant également une information provenant des autres frames $\tau_{mes}$.

Le dernier cas correspond à un cas général dont les deux premiers cas sont des cas particuliers. Nous ne considérerons donc dans la suite que le cas général.

On définit au préalable $R_{i,S_{i,k}}^{(n_{i,k})}$ comme la ROI contenant à l'itération k les $n_{i,k}$ voxels présentant les voxels x de plus petit rang parmi tous les voxels de $D_i$ à l'exclusion des voxels appartenant à l'ensemble $S_{i,k}$.

Soit $\delta$ une modification élémentaire du nombre de voxels des régions d'intérêt $R_i$ et soit $\Delta_k$ un ensemble de modifications élémentaires possibles à l'itération k.

Soit $R_{i,S_{i,k,\tau_{opt}}}^{(n_{i,k,\tau_{opt}})}$ la ROI définie à l'itération k pour l'optimisation de la région d'intérêt $R_i$ pour la frame $\tau_{opt}$, contenant $n_{i,k,\tau_{opt}}$ voxels et excluant les voxels de l'ensemble $S_{i,k,\tau_{opt}}$ tout en restant conforme à (C1) et (C2).

Soit $T_{i,k,\tau_{opt}}$ la concentration du traceur que l'on cherche à estimer pour la frame $\tau_{opt}$ et soit $T_{i,k,\tau_{opt},\tau_{mes}}$ la concentration du traceur estimée dans $R_{i,S_{i,k,\tau_{opt}}}^{(n_{i,k,\tau_{opt}})}$ au temps $\tau_{mes}$.

Soit $\sigma^2_{x,\tau_{mes}}$ la variance du bruit au voxel x au temps $\tau_{mes}$. Cette variance peut être déterminée en fonction de l'algorithme de reconstruction de l'image et éventuellement du signal TEP mesuré au voxel x au temps $\tau_{mes}$.

Soit $t_{i,k,\tau_{opt},\tau_{mes}}$ la concentration de traceur moyenne mesurée dans la région d'intérêt $R_i$ à l'itération k au temps $\tau_{mes}$ pour l'estimation de $T_{i,k,\tau_{opt}}$.

Sous certaines hypothèses, la variance $\zeta^2_{i,k,\tau_{opt},\tau_{mes}}$ de l'erreur due au bruit commise sur l'estimation de $t_{i,k,\tau_{opt},\tau_{mes}}$ peut également être déterminée à partir de $\sigma^2_{x,\tau_{mes}}$ et de $n_{i,k,\tau_{opt}}$.

Connaissant cette erreur, le procédé GTM fournit une borne supérieure de la variance $\xi^2_{i,k,\tau_{opt},\tau_{mes}}$ de l'erreur due au bruit commise sur l'estimation de $T_{i,k,\tau_{opt}}$ :

$$\xi^2_{i,k,\tau_{opt},\tau_{mes}} = \sum_{i=1}^{I} W^{-1}_{k,\tau_{opt}} \times \zeta^2_{i,k,\tau_{opt},\tau_{mes}} \qquad (6)$$

où $W_{k,\tau_{opt}}$ est la matrice GTM calculée à l'itération k pour l'estimation des $\{T_{i,k,\tau_{opt}}\}_{1\leq i\leq I}$.

Soit

$$h\left( \{T_{i,k,\tau_{opt},\tau_{mes}}\}_{1\leq\tau_{mes}\leq T,1\leq i\leq I}, \{\xi^2_{i,k,\tau_{opt},\tau_{mes}}\}_{1\leq\tau_{mes}\leq T,1\leq i\leq I}, \{T_{i,l,\tau_{opt},\tau_{mes}}\}_{1\leq l<k,1\leq\tau_{mes}\leq T,1\leq i\leq I}, \{\xi^2_{i,l,\tau_{opt},\tau_{mes}}\}_{1\leq l<k,1\leq\tau_{mes}\leq T,1\leq i\leq I} \right)$$

un critère quantitatif évaluant l'écart relativement au bruit entre l'estimation de $\{T_{i,k,\tau_{opt},\tau_{mes}}\}_{1\leq\tau_{mes}\leq T,1\leq i\leq 1}$ à l'itération k et les estimations de $\{T_{i,l,\tau_{opt},\tau_{mes}}\}_{1\leq l<k,1\leq\tau_{mes}\leq T,1\leq i\leq I}$ aux itérations précédentes.

h prendra des valeurs d'autant plus petites que $\{T_{i,k,\tau_{opt},\tau_{mes}}\}_{1\leq\tau_{mes}\leq T,1\leq i\leq I}$ est différent de $\{T_{i,l,\tau_{opt},\tau_{mes}}\}_{1\leq l<k,1\leq\tau_{mes}\leq T,1\leq i\leq I}$.

Soit $h_{min}$ un seuil en dessous duquel $\{T_{i,k,\tau_{opt},\tau_{mes}}\}_{1\leq\tau_{mes}\leq T,1\leq i\leq I}$ est jugé significativement différent de $\{T_{i,l,\tau_{opt},\tau_{mes}}\}_{1\leq l<k,1\leq\tau_{mes}\leq T,1\leq i\leq I}$.

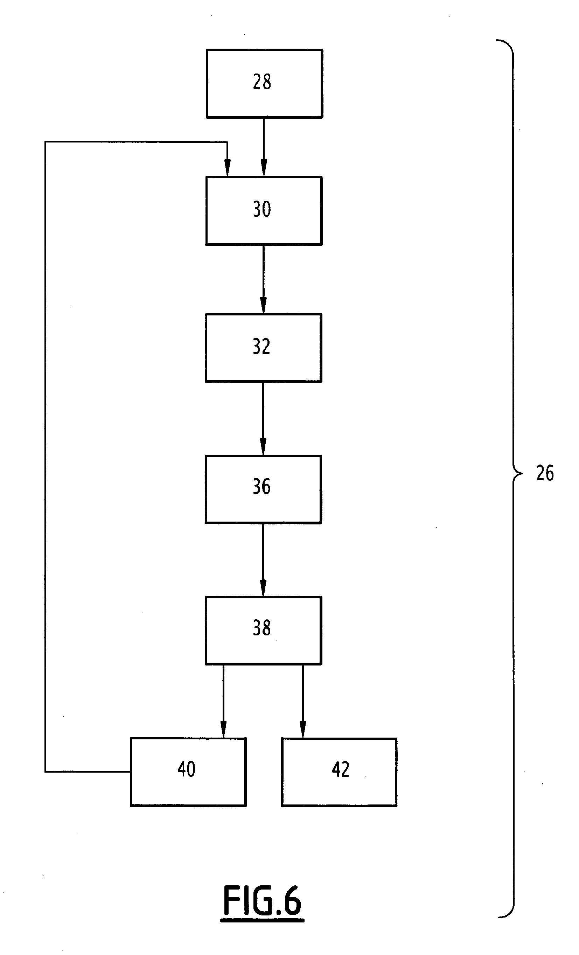

L'algorithme de la boucle itérative pour l'optimisation des régions d'intérêt $R_j$ est le suivant (Figure 6).

L'étape 28 correspond à l'initialisation de la boucle.

Les régions d'intérêt $R_j$ sont initialisées par $R_{i,S_{i,0,\tau_{opt}}}^{(n_{i,0,\tau_{opt}})}$ , où $n_{i,0,\tau_{opt}} > 2$ et où $S_{i,0}$ est un ensemble vide.

A chaque itération k, on passe ensuite à une étape 30 de détermination d'un ensemble $\Delta_k$ de modifications élémentaires $\delta$ possibles des $\left\{R_{i,S_{i,k-1,\tau_{opt}}}^{(n_{i,k-1,\tau_{opt}})}\right\}_{1\leq i\leq I}$ qui peuvent résulter en l'addition de voxels à une région d'intérêt $R_i$ et/ou en l'addition de voxels à $S_j$ et/ou en la modification de $\Lambda_i$.

A l'étape 32, pour tout $\delta \in \Delta$, on calcule $\left\{t_i^{(\delta)}\right\}_{1\leq i\leq I}$ , W,

$\left\{T_{i,k,\tau_{opt},\tau_{mes}}^{(\delta)}\right\}_{1\leq\tau_{mes}\leq T,1\leq i\leq I}$ , $\left\{\xi_{i,k,\tau_{opt},\tau_{mes}}^{2(\delta)}\right\}_{1\leq\tau_{mes}\leq T,1\leq i\leq I}$ et

$$h\left(\begin{array}{cc}\left\{T_{i,k,\tau_{opt},\tau_{mes}}^{(\delta)}\right\}_{1\leq\tau_{mes}\leq T,1\leq i\leq I}, & \left\{\xi_{i,k,\tau_{opt},\tau_{mes}}^{2(\delta)}\right\}_{1\leq\tau_{mes}\leq T,1\leq i\leq I}, \\ \left\{T_{i,l,\tau_{opt},\tau_{mes}}\right\}_{1\leq l<k,1\leq\tau_{mes}\leq T,1\leq i\leq I}, & \left\{\xi_{i,l,\tau_{opt},\tau_{mes}}^{2}\right\}_{1\leq l<k,1\leq\tau_{mes}\leq T,1\leq i\leq I}\end{array}\right).$$

A l'étape 36, on choisit la modification élémentaire $\delta_{opt}$ qui donne une estimation de la concentration du traceur la plus proche des concentrations du traceur estimées aux itérations précédentes :

$$\delta_{opt} = \arg\max_{\delta}\left(h\left(\begin{array}{cc}\left\{T_{i,k,\tau_{opt},\tau_{mes}}^{(\delta)}\right\}_{1\leq\tau_{mes}\leq T,1\leq i\leq I}, & \left\{\xi_{i,k,\tau_{opt},\tau_{mes}}^{2(\delta)}\right\}_{1\leq\tau_{mes}\leq T,1\leq i\leq I}, \\ \left\{T_{i,l,\tau_{opt},\tau_{mes}}\right\}_{1\leq l<k,1\leq\tau_{mes}\leq T,1\leq i\leq I}, & \left\{\xi_{i,l,\tau_{opt},\tau_{mes}}^{2}\right\}_{1\leq l<k,1\leq\tau_{mes}\leq T,1\leq i\leq I}\end{array}\right)\right) \quad (7)$$

A l'étape 38, on compare le critère h correspondant à $\delta_{opt}$ avec $h_{min}$.

$$\text{Si } h\left(\begin{array}{cc}\left\{T_{i,k,\tau_{opt},\tau_{mes}}^{(\delta_{opt})}\right\}_{1\leq\tau_{mes}\leq T,1\leq i\leq I}, & \left\{\xi_{i,k,\tau_{opt},\tau_{mes}}^{2(\delta_{opt})}\right\}_{1\leq\tau_{mes}\leq T,1\leq i\leq I}, \\ \left\{T_{i,l,\tau_{opt},\tau_{mes}}\right\}_{1\leq l<k,1\leq\tau_{mes}\leq T,1\leq i\leq I}, & \left\{\xi_{i,l,\tau_{opt},\tau_{mes}}^{2}\right\}_{1\leq l<k,1\leq\tau_{mes}\leq T,1\leq i\leq I}\end{array}\right) > h_{min},$$

alors on applique la modification élémentaire $\delta_{opt}$ aux $R_i$ et à $S_i$ (étape 40) et on passe à l'itération suivante k+1 en revenant à l'étape 30.

Sinon l'algorithme se termine (étape 42), et on a :

- $R_i = R_{i,S_{i,k-1,\tau_{opt}}}^{(n_{j,k-1,\tau_{opt}})}$ ;

- $\{T_{i,\tau_{opt}}\}_{1\leq i\leq I}=\{T_{i,k-l,\tau_{opt},\tau_{opt}}\}_{1\leq i\leq I}$ ; et

$$- \quad \left\{ \varsigma_{i,\tau_{opt}} \right\}_{1 \le i \le I} = \left\{ \varsigma_{i,k-1,\tau_{opt},\tau_{opt}} \right\}_{1 \le i \le I} .$$

En référence à la Figure 3, on obtient ainsi à l'étape 44 l'estimation de la vraie concentration $T_i$ du traceur dans les domaines spatiaux $D_i$.

On obtient également, à partir de l'étape 26 d'optimisation des régions d'intérêt $R_j$, la taille finale de ces régions d'intérêt (étape 46) qui permet d'optimiser les paramètres du procédé.

En effet, le procédé comprend divers paramètres déterminant l'ordre dans lequel les voxels vont être agrégés aux ROIs. Parmi ces paramètres, on trouve les $\Lambda_i$, les fonctions $\alpha(x)$, $\beta(x)$, $\gamma(x)$ et $g_i(\alpha(x), \beta(x), \gamma(x), \Lambda_i, S_i)$.

Le procédé d'optimisation réalise un compromis entre les erreurs d'estimation dues au bruit et les erreurs d'estimation provenant des effets tels que les erreurs de segmentation et les mouvements physiologiques.

Les erreurs dues au bruit ont tendance à décroître quand la taille des ROIs augmente.

La taille finale des $R_j$ est donc un indicateur de :

- la qualité des $D_i$ ;
- l'homogénéité du signal TEP au sein des $D_i$ ; et
- la qualité des paramètres déterminant l'ordre des voxels.

A $D_i$ et homogénéité du signal fixes, la taille finale des $R_j$ est donc un indicateur de la qualité du choix des $\Lambda_i$, les fonctions $\alpha(x)$, $\beta(x)$, $\gamma(x)$ et $g_i(\alpha(x), \beta(x), \gamma(x), \Lambda_i, S_i)$.

On peut donc soit :

- lancer plusieurs optimisations des $R_j$ avec des $D_i$, $\Lambda_i$, $\alpha(x)$, $\beta(x)$, $\gamma(x)$ et $g_i(\alpha(x), \beta(x), \gamma(x), \Lambda_i, S_i)$ différents et choisir les $D_i$, $\Lambda_i$, $\alpha(x)$, $\beta(x)$, $\gamma(x)$ et $g_i(\alpha(x), \beta(x), \gamma(x), \Lambda_i, S_i)$ pour lesquels la taille des $R_j$, ou toute fonction monotone croissante de cette taille ou toute autre fonction évaluant de manière quantitative la qualité de l'estimation des $T_i$, est maximale (étape 48) ;
- donner la taille des $R_j$, ou la valeur de toute fonction monotone de cette taille ou toute autre fonction évaluant de manière quantitative la qualité de l'estimation des $T_i$, comme indicateur global de la qualité des $D_i$, $\Lambda_i$, $\alpha(x)$, $\beta(x)$, $\gamma(x)$ et $g_i(\alpha(x), \beta(x), \gamma(x), \Lambda_i, S_i)$ (étape 50).

Un exemple de réalisation du procédé selon l'invention est le suivant :

- $RSF_i(x)$ est estimée selon la méthode de Frouin et al. ;
- $J=I$ et $j=i$ ;
- les $D_i$ sont définis comme les domaines spatiaux délimités par la segmentation en utilisant un procédé basé sur l'analyse de moyennes locales (LMA pour Local Mean Analysis) proposé par Maroy et al. dans l'article « Segmentation of Rodent Whole-Body Dynamic PET Images: An Unsupervised Method Based on Voxel Dynamics », IEEE Trans. Med. Imaging, 2008 ;

-

$\Lambda_i$ est l'ensemble des voxels $x \in D_i$ extraits lors de l'étape d'extraction de minima locaux de l'image $\hat{\alpha}_p^2$ mesurant à chaque voxel $p$ l'homogénéité de la concentration du traceur dans le voisinage de $p$ ;

-

$\alpha(x)$ est l'ordre des voxels triés par $\hat{\alpha}_x^2$ croissant ;
- $\beta(x)$ est l'odre des voxels triés par $RSF_i(x)$ décroissant ;
- $g_i(\alpha(x), \beta(x), \gamma(x), \Lambda_i, S_i)$ est l'ordre de $x$ parmi les voxels $x \in D_i$ dont les voxels de $S_i$ sont exclus et qui sont triés par $(a \times \alpha^2(x) + (1-a) \times \beta^2(x))$ croissant. Dans cet ordre, les voxels ne vérifiant pas (C1) voient leur rang décalé jusqu'à ce qu'ils puissent vérifier (C1) ;
- $\Delta_k = \{\delta_i\}_{1 \le i \le I}$, où $\delta_i$ est la modification élémentaire qui consiste à ajouter $d_i$ voxels à la région d'intérêt $R_i$ ;
- $\tau_{opt}$ est la frame pour laquelle on optimise les $\{R_j\}_{1 \le j \le J}$ et $\tau_{mes}$ est une frame où l'on estime les $\{T_i\}_{1 \le i \le I}$ ;
- soit $L$ un niveau d'échelle et $L_{max}$ le niveau d'échelle maximum, fixé a priori (par exemple $L_{max} = T/4$). On associe à la frame $\tau_{opt}$ au niveau d'échelle 0 un ensemble $F_L$ de $L+1$ frames consécutives au niveau d'échelle $L$, ces $L$ frames étant centrées sur $\tau_{opt}$ ;
- soit $p_{i,L}$ la p-value associée à la statistique t

$$\sum_{\tau_{meas} \in F_L} \left( \sum_{l=1}^{k-1} \left( \frac{T_{i,k,\tau_{opt},\tau_{mes}}^{(\delta_{opt})} - T_{i,l,\tau_{opt},\tau_{mes}}}{\sqrt{\left( \xi_{i,k,\tau_{opt},\tau_{mes}}^{2^{(\delta_{opt})}} + \xi_{i,l,\tau_{opt},\tau_{mes}}^{2} \right)}} \right) \right);$$

$$- h \left( \begin{matrix} \left\{ T_{i,k,\tau_{opt},\tau_{mes}}^{(\delta_{opt})} \right\}_{1 \le \tau_{mes} \le T, 1 \le i \le I}, & \left\{ \xi_{i,k,\tau_{opt},\tau_{mes}}^{2^{(\delta_{opt})}} \right\}_{1 \le \tau_{mes} \le T, 1 \le i \le I}, \\ \left\{ T_{i,l,\tau_{opt},\tau_{mes}} \right\}_{1 \le l < k, 1 \le \tau_{mes} \le T, 1 \le i \le I}, & \left\{ \xi^{2} \right\}_{i,l,\tau_{opt},\tau_{mes}} {}_{1 \le l < k, 1 \le \tau_{mes} \le T, 1 \le i \le I} \end{matrix} \right) = \min_{1 \le i \le I} \left( \min_{L} \left( p_{i,L} \right) \right).$$

L'algorithme est le suivant.

A l'étape d'initialisation :

$\delta_i = 0{,}001 \times \#D_i$, où $\#D_i$ est le cardinal du domaine spatial segmenté $D_i$, $n_{i,0,\tau_{opt}} = \delta_i$, $R_i$ est initialisée par $R_{i,S_{i,0,\tau_{opt}}}^{(n_{i,0,\tau_{opt}})}$ et $S_{i,0}$ est un ensemble vide.

A chaque itération k et pour tout i :

- on calcule $\left\{ t_i^{(\delta_i)} \right\}_{1 \le i \le I}$, w $\left\{ T_{i,k,\tau_{opt},\tau_{mes}}^{(\delta_i)} \right\}_{1 \le \tau_{mes} \le T, 1 \le i \le I}$, $\left\{ \xi_{i,k,\tau_{opt},\tau_{mes}}^{2^{(\delta_i)}} \right\}_{1 \le \tau_{mes} \le T, 1 \le i \le I}$ et

$$h \left( \begin{matrix} \left\{ T_{i,k,\tau_{opt},\tau_{mes}}^{(\delta_i)} \right\}_{1 \le \tau_{mes} \le T, 1 \le i \le I}, & \left\{ \xi_{i,k,\tau_{opt},\tau_{mes}}^{2^{(\delta_i)}} \right\}_{1 \le \tau_{mes} \le T, 1 \le i \le I}, \\ \left\{ T_{i,l,\tau_{opt},\tau_{mes}} \right\}_{1 \le l < k, 1 \le \tau_{mes} \le T, 1 \le i \le I}, & \left\{ \xi^{2} \right\}_{i,l,\tau_{opt},\tau_{mes}} {}_{1 \le l < k, 1 \le \tau_{mes} \le T, 1 \le i \le I} \end{matrix} \right); \text{ et}$$

- soit $i = \arg\max_{1 \le i \le I} \left( h \left( \begin{matrix} \left\{ T_{i,k,\tau_{opt},\tau_{mes}}^{(\delta_i)} \right\}_{1 \le \tau_{mes} \le T, 1 \le i \le I}, & \left\{ \xi_{i,k,\tau_{opt},\tau_{mes}}^{2^{(\delta_i)}} \right\}_{1 \le \tau_{mes} \le T, 1 \le i \le I}, \\ \left\{ T_{i,l,\tau_{opt},\tau_{mes}} \right\}_{1 \le l < k, 1 \le \tau_{mes} \le T, 1 \le i \le I}, & \left\{ \xi^{2} \right\}_{i,l,\tau_{opt},\tau_{mes}} {}_{1 \le l < k, 1 \le \tau_{mes} \le T, 1 \le i \le I} \end{matrix} \right) \right).$

Si $h \left( \begin{matrix} \left\{ T_{i,k,\tau_{opt},\tau_{mes}}^{(\delta_i)} \right\}_{1 \le \tau_{mes} \le T, 1 \le i \le I}, & \left\{ \xi_{i,k,\tau_{opt},\tau_{mes}}^{2^{(\delta_i)}} \right\}_{1 \le \tau_{mes} \le T, 1 \le i \le I}, \\ \left\{ T_{i,l,\tau_{opt},\tau_{mes}} \right\}_{1 \le l < k, 1 \le \tau_{mes} \le T, 1 \le i \le I}, & \left\{ \xi^{2} \right\}_{i,l,\tau_{opt},\tau_{mes}} {}_{1 \le l < k, 1 \le \tau_{mes} \le T, 1 \le i \le I} \end{matrix} \right) > h_{\min}$, alors on ajoute $d_i$ voxels à $n_{i,k,\tau_{opt}}$, on re-détermine $R_{i,S_{i,k,\tau_{opt}}}^{(n_{i,k,\tau_{opt}})}$ et on passe à l'itération suivante k+1.

Sinon, si $d_i > 1$, on diminue $d_i$ et on retente une itération.

Sinon, si $\#S_i < S_{max}$, on ajoute les $d_i$ voxels ci-dessus à $S_i$, on augmente $d_i$ et on retente une itération.

Sinon, on stoppe l'algorithme et la solution est :

- $\{n_{i,\tau_{opt}}\}_{1 \le i \le I} = \{n_{i,k-1,\tau_{opt}}\}_{1 \le i \le I}$ ;

- $R_i = R_{i,s_{i,k-1,\tau_{opt}}}^{i,k-1,\tau_{opt}}$ :

- $\{T_{i,\tau_{opt}}\}_{1 \le i \le I} = \{T_{i,k-1,\tau_{opt},\tau_{opt}}\}_{1 \le i \le I}$ : et

- $\left\{\xi^2_{i,\tau_{opt}}\right\}_{1 \le i \le I} = \left\{\xi^2_{i,k-1,\tau_{opt},\tau_{opt}}\right\}_{1 \le i \le I}$ .

Les résultats ont été obtenus avec le matériel suivant.

Pour la simulation, nous avons simulé au moyen d'un simulateur analytique cinquante acquisitions TEP du fantôme de souris MOBY sur un scanner TEP dédié au petit animal (le scanner simulé était le FOCUS 220 de Siemens avec une résolution spatiale de 1,3mm), avec des frames temporelles d'une minute chacune. Les images ont été reconstruites en utilisant le procédé OSEM (pour Ordered Subsets Expectation Maximization), qui est un procédé classique de reconstruction d'image TEP, avec des voxels de $0,5 \times 0,5 \times 0,8$ mm$^3$.

Les données expérimentales incluent seize souris injectées avec des xénogreffes de tumeurs humaines péritonéales. Les souris ont reçu une injection de Fluoro-thymidine (18F-FLT), immédiatement suivie par une acquisition TEP de 5400 min composée de 18 frames temporelles (cinq frames d'une minute, cinq frames de deux minutes, trois frames de cinq minutes, trois frames de dix minutes, et deux frames de quinze minutes). Les images ont été reconstruites en utilisant le procédé OSEM avec des voxels de $0,5 \times 0,5 \times 0,8$ mm$^3$. Les souris ont été sacrifiées immédiatement après l'acquisition, et la concentration du traceur a été comptée dans les organes prélevés. Cette concentration comptée dans les organes a servi de « gold standard » pour la concentration estimée à la fin de l'acquisition.

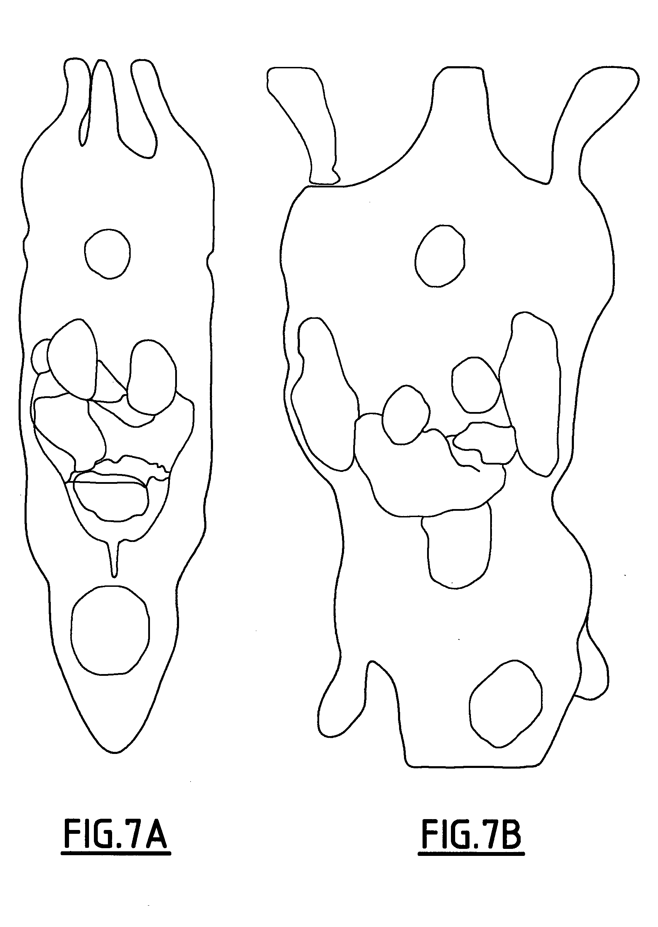

Les images TEP ont été segmentées en utilisant le procédé LMA (Figure 7A pour la simulation et Figure 7B pour les données expérimentales).

L'estimation de la concentration du traceur dans les organes est effectuée selon trois procédés :

- calcul de la TAC moyenne au sein du domaine spatial segmenté correspondant à l'organe ;
- correction de volume partiel opérée par le procédé GTM implémenté dans l'espace image tel que décrit par Frouin et al. (nommé simplement « GTM » dans la suite) ; et
- correction de volume partiel opérée par le procédé proposé dans l'exemple de réalisation de la présente invention (nommé « LMA-GTM » dans la suite).

Les procédés GTM et LMA-GTM ont été comparés sur la base de :

- ETR : qui est l'écart en valeur absolu entre la mesure correspondante du gold standard et la valeur mesurée, exprimé en pourcentage de la mesure gold standard ; et
- ARC : qui est le ratio de recouvrement apparent, en d'autres termes la valeur mesurée divisée par la valeur correspondante du gold standard.

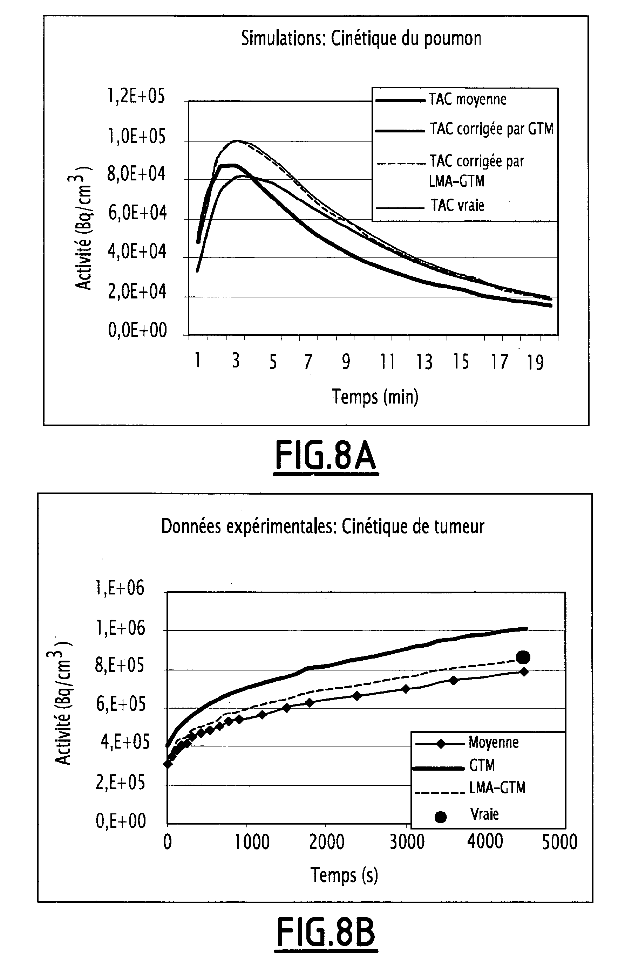

Les Figures 8A et 8B montrent des exemples de variation temporelle de la concentration de traceur (TACs) estimée pour les simulations (Figure 8A) et pour les données expérimentales (Figure 8B).

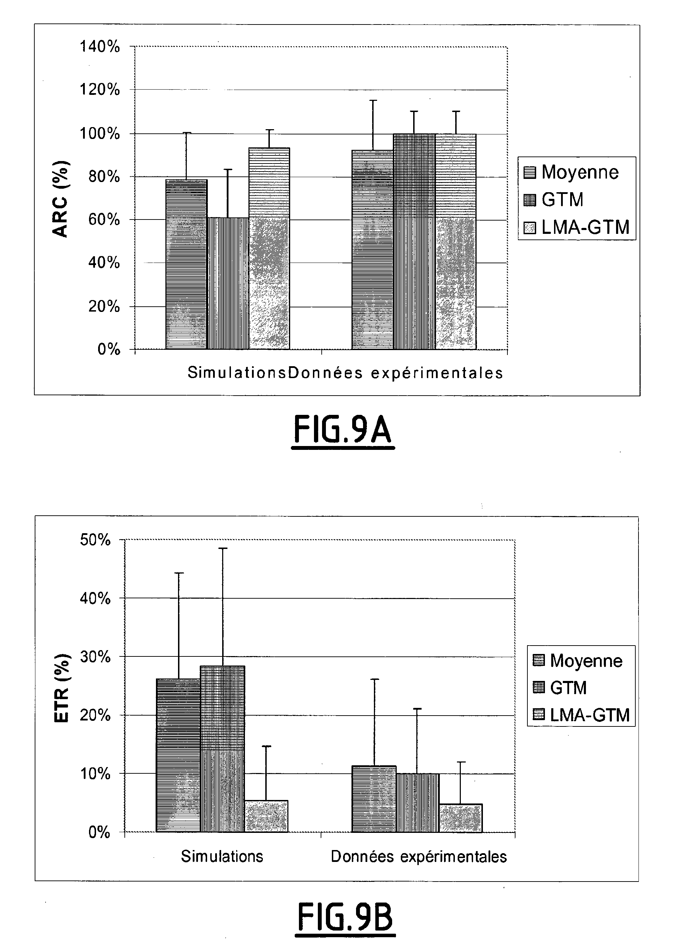

Les Figures 9A et 9B montrent que le procédé LMA-GTM améliore de manière significative la précision des mesures (la p-value est inférieure à $10^{-5}$ tant pour les simulations que pour les données expérimentales) et que le procédé GTM n'améliore que les TACs extraites pour les données expérimentales seulement.

La précision des mesures estimées au moyen du procédé LMA-GTM est bonne (ETR$_{\text{Simulations}}$ = 5,3% $\pm$ 8% et ETR$_{\text{Données}}$ expérimentales = 4,8% $\pm$ 7%) et le contraste apparent est correctement récupéré (ARC$_{\text{Simulations}}$ = 94% $\pm$ 10% et ARC$_{\text{Données}}$ expérimentales = 99,98% $\pm$ 9%).

Les résultats obtenus en utilisant le procédé LMA-GTM sont significativement meilleurs en termes d'ARC et d'ETR que ceux obtenus par le procédé GTM (la p-value est inférieure à $10^{-5}$).

Le processus complet d'extraction de TAC corrigée du volume partiel prend 10 minutes par image :

- segmentation (~15 secondes) ;
- nommage des organes par l'utilisateur (~5 minutes) ; et
- correction de volume partiel ($\sim$4 minutes).

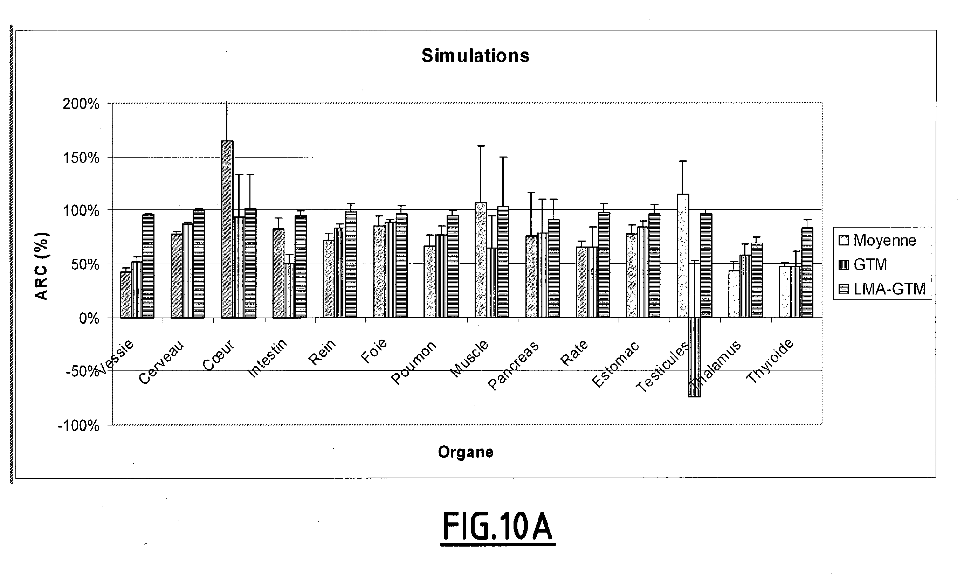

La Figure 10A montre l'ARC obtenu par les trois procédés sur les images de simulations pour chaque organe.

Pour le procédé LMA-GTM, l'ARC varie entre 94% $\pm$ 5% et 99,3% $\pm$ 1 % pour tous les organes à l'exception des petits organes, tels que le thalamus et la thyroïde, et le pancréas du fait de sa forme.

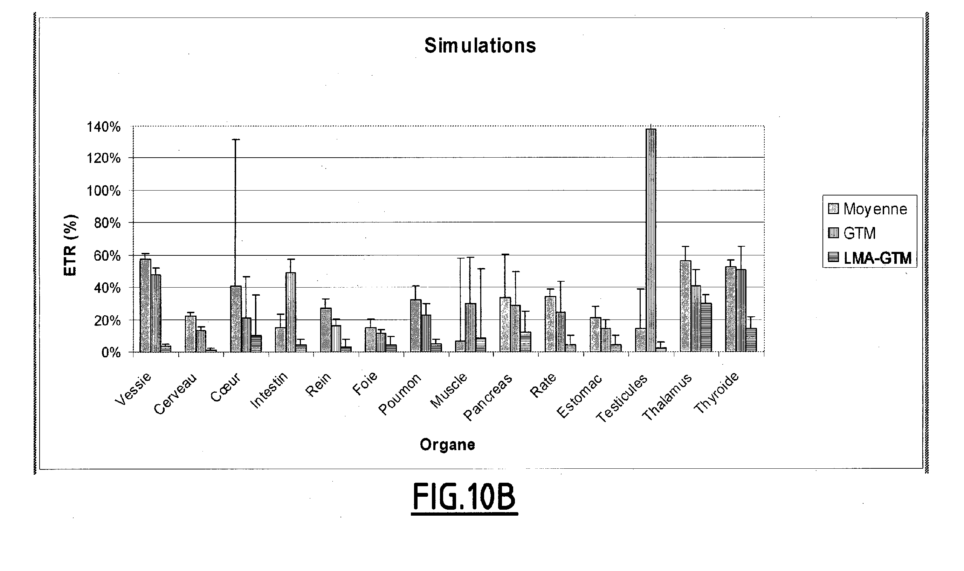

L'ETR (Figure 10B) est inférieur à 10% de la valeur vraie pour tous les organes à l'exception du thalamus (ETR = 32% $\pm$ 5%) et de la thyroïde (ETR = 21% $\pm$ 6%).

La précision obtenue au moyen du procédé LMA-GTM est meilleure que celle obtenue par le calcul de la TAC moyenne et par la procédé GTM, et ce avec une p-value inférieure à $10^{-5}$ pour tous les organes.

Les résultats obtenus pour les données expérimentales sont similaires à ceux obtenus pour les simulations.

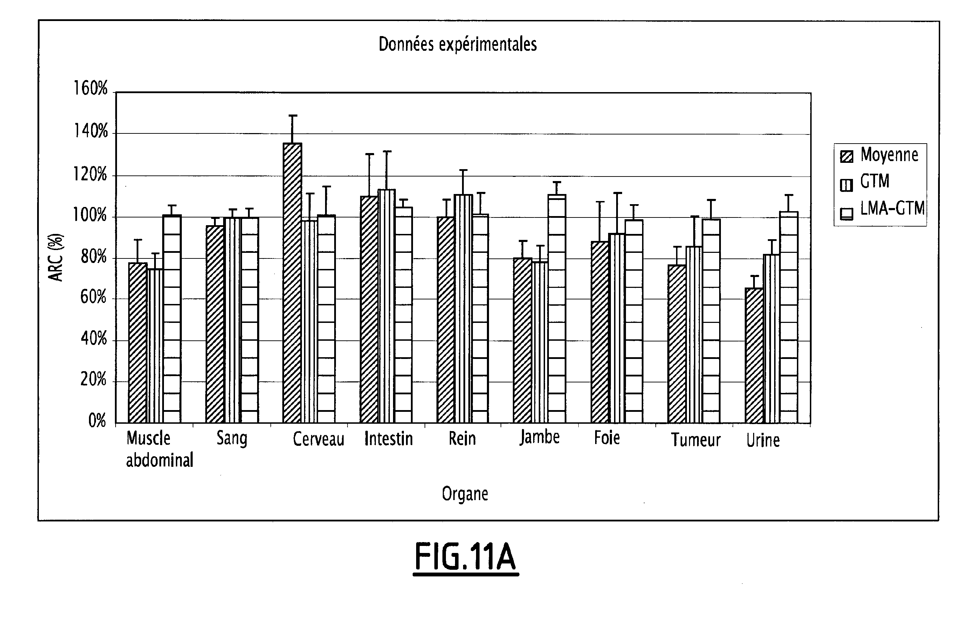

La récupération de contraste (Figure 11 A) était bonne (entre 98,4% $\pm$ 7% et 110% $\pm$ 6%).

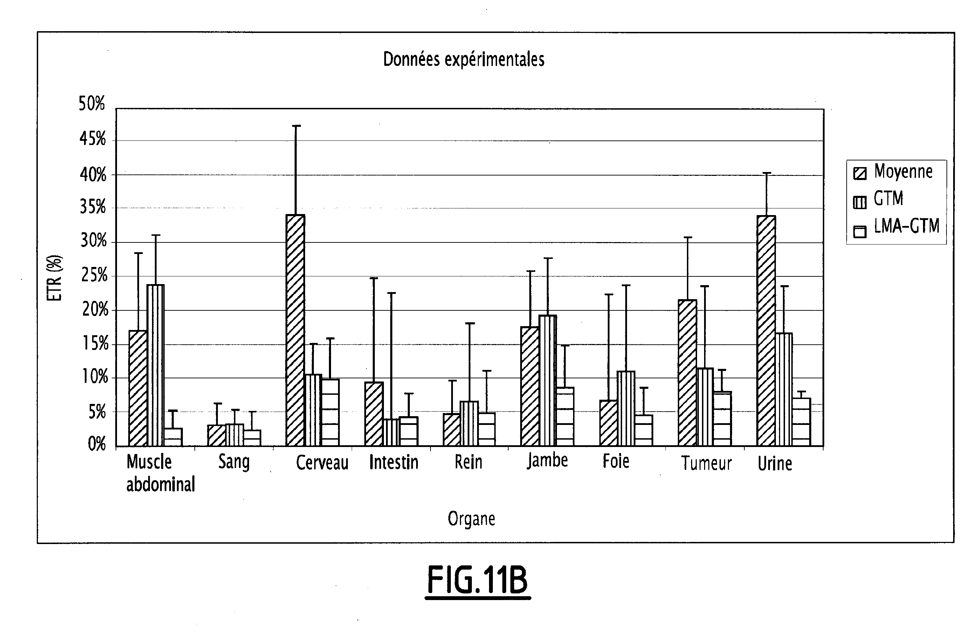

De plus, l'ETR (Figure 11 B) était inférieur à 10% pour le procédé LMA-GTM pour tous les organes.

Dans les deux cas, le procédé LMA-GTM obtient des meilleurs résultats que le procédé GTM (p-value inférieure à 0,002).

Pour les études du cerveau, le procédé GTM est considéré comme un voire le procédé de référence pour la correction de l'effet de volume partiel dans les images TEP.

Pour les études chez le rongeur, il n'existe pas à notre connaissance de procédé générique (applicable à tous les traceurs et à toutes les pathologies) de correction de volume partiel.

Le procédé LMA-GTM montre un fort potentiel pour de telles études, mais aussi probablement pour des études chez l'homme, dans des image corps entier ou cerveau.

En effet, le procédé LMA-GTM :

- utilise la délinéation automatique LMA d'organes dans les images TEP ;
- ne nécessite pas d'information anatomique ni d'a priori ;
- est robuste aux erreurs de segmentation et aux erreurs dues aux effets non modélisables par la correction de PVE ; et
- est rapide, facile à utiliser et précise.

L'invention propose donc un procédé permettant d'estimer de manière fiable et précise la concentration d'un traceur dans un ensemble de structures tissulaires en délimitant de manière optimale les régions d'intérêt dans lesquelles la concentration du traceur est mesurée.

**Revendications**

1. Procédé d'estimation de la concentration d'un traceur dans un ensemble de structures tissulaires comprenant au moins une structure tissulaire à partir d'une image de mesure de la concentration du traceur dans ledit ensemble de structures tissulaires obtenue par un appareil d'imagerie, l'image comprenant au moins un domaine spatial ($D_i$) à l'intérieur duquel la concentration du traceur est homogène et au moins une région d'intérêt ($R_j$) à l'intérieur de laquelle la concentration du traceur est mesurée, **caractérisé en ce qu'**il comprend les étapes suivantes :

   - détermination d'une matrice de transfert géométrique (W) dont les coefficients ($w_{i,j}$) sont représentatifs de la contribution des domaines spatiaux ($D_i$) à la mesure de la concentration du traceur dans les régions d'intérêt ($R_j$) ;
   - optimisation des coefficients ($w_{i,j}$) de la matrice de transfert géométrique (W) par délimitation des régions d'intérêt ($R_j$) les meilleures en termes d'erreurs pour mesurer la concentration du traceur, la délimitation des régions d'intérêt ($R_j$) étant réalisée suivant une boucle itérative comprenant à chaque itération (k) les étapes suivantes :

      - modification des régions d'intérêt ($R_j$) ; et
      - calcul des coefficients ($w_{i,j}$) de la matrice de transfert géométrique (W) à partir des régions d'intérêt ($R_j$) modifiées ;

   - choix d'une matrice de transfert géométrique (W) optimisée parmi les matrices de transfert géométrique (W) calculées ; et
   - estimation de la concentration du traceur à partir de la matrice de transfert géométrique (W) optimisée.

2. Procédé selon la revendication 1, **caractérisé en ce que** l'étape de modification des régions d'intérêt ($R_j$) comprend l'ajout et/ou l'exclusion d'au moins un élément d'image (x).

3. Procédé selon la revendication 1 ou 2, **caractérisé en ce que** la boucle itérative pour la délimitation des régions d'intérêt ($R_j$) comprend, pour chaque itération (k), les étapes suivantes :

   - détermination d'un ensemble de modifications élémentaires ($\delta$) consistant chacune à ajouter au moins un élément d'image (x) aux régions d'intérêt ($R_j$) ;
   - estimation, pour chaque modification élémentaire ($\delta$), de la concentration du traceur dans les régions d'intérêt ($R_j$) modifiées par la modification élémentaire ($\delta$);

- évaluation, pour chaque modification élémentaire ($\delta$), d'un critère (h) permettant de comparer la concentration du traceur estimée avec les concentrations du traceur estimées à au moins une itération précédente ;
- choix de la modification élémentaire ($\delta_{opt}$) donnant une estimation de la concentration du traceur la plus proche des concentrations du traceur estimées aux itérations précédentes ;
- comparaison du critère (h) correspondant à la modification élémentaire choisie ($\delta_{opt}$) avec un seuil prédéterminé ($h_{min}$) ; et
- application ou non de la modification élémentaire choisie ($\delta_{opt}$) ou arrêt de la boucle itérative en fonction du résultat de la comparaison du critère (h) avec le seuil ($h_{min}$).

4. Procédé selon l'une quelconque des revendications 1 à 3, **caractérisé en ce qu'**il comprend une étape d'ordonnancement des éléments d'image (x) dans chaque domaine spatial ($D_i$) en fonction de critères d'ordre permettant d'évaluer leur risque d'introduire des erreurs non dues au bruit dans l'estimation de la concentration du traceur.

5. Procédé selon la revendication 4, **caractérisé en ce que** les critères d'ordre comprennent l'un au moins parmi un premier critère ($\alpha(x)$) permettant de définir si la concentration contenue dans l'élément d'image (x) provient d'un seul ou de plusieurs domaines spatiaux ($D_i$) différents, un deuxième critère ($\beta(x)$) permettant de définir si l'élément d'image (x) participe au calcul des éléments non diagonaux de la matrice de transfert géométrique (W), et un troisième critère ($\gamma(x)$) permettant de définir si l'élément d'image (x) est fiable pour l'estimation de la concentration du traceur.

6. Procédé selon la revendication 5, **caractérisé en ce que** le premier critère ($\alpha(x)$) permet de mesurer l'homogénéité de la concentration du traceur dans le voisinage de l'élément d'image (x), le deuxième critère ($\beta(x)$) permet de mesurer la contribution des domaines spatiaux ($D_i$) à la mesure de la concentration du traceur dans l'élément d'image (x), et le troisième critère ($\gamma(x)$) est issu d'un atlas probabiliste.

7. Procédé selon l'une quelconque des revendications 4 à 6, **caractérisé en ce que** la boucle itérative pour la délimitation des régions d'intérêt ($R_j$) est réalisée suivant l'ordre des éléments d'image (x) obtenu à l'étape d'ordonnancement.

8. Procédé selon l'une quelconque des revendications 1 à 7, **caractérisé en ce qu'**il comprend une étape d'estimation de la fonction d'étalement du point (PSF) de l'appareil d'imagerie en tout point du champ de vue de l'appareil d'imagerie.

9. Procédé selon la revendication 8, **caractérisé en ce que** l'étape d'estimation de la fonction d'étalement du point (PSF) comprend les étapes suivantes :

- mesure de la fonction d'étalement du point (PSF) en plusieurs points du champ de vue ; et
- interpolation et/ou extrapolation des mesures obtenues.

10. Procédé selon la revendication 8 ou 9, **caractérisé en ce qu'**il comprend une étape d'estimation d'une fonction d'étalement de région (RSF) pour chaque domaine spatial ($D_i$) par convolution de la fonction d'étalement du point (PSF) avec chaque domaine spatial ($D_i$).

11. Procédé selon l'une quelconque des revendications 1 à 10, **caractérisé en ce qu'**il comprend une étape de calcul de la taille des régions d'intérêt ($R_j$).

12. Procédé selon la revendication 11, **caractérisé en ce qu'**il comprend une étape de délimitation des domaines spatiaux ($D_i$) de manière à obtenir des régions d'intérêt ($R_j$) de taille maximale.

13. Procédé selon la revendication 11 ou 12 et l'une quelconque des revendications 4 à 7 prises ensemble, **caractérisé en ce qu'**il comprend une étape d'optimisation des critères d'ordre de manière à obtenir des régions d'intérêt ($R_j$) de taille maximale.

14. Procédé selon l'une quelconque des revendications 1 à 13, **caractérisé en ce que** l'image de mesure de la concentration du traceur dans la structure tissulaire est une séquence d'images tridimensionnelles mises en correspondance et comprenant au moins une image tridimensionnelle, et **en ce que** et les éléments d'image (x) sont des voxels.

**15.** Procédé selon la revendication 14, **caractérisé en ce que** l'image tridimensionnelle est obtenue par tomographie par émission de positrons.

**16.** Support d'information comprenant un code pour estimer la concentration d'un traceur dans un ensemble de structures tissulaires comprenant au moins une structure tissulaire à partir d'une image de mesure de la concentration du traceur dans ledit ensemble de structures tissulaires obtenue par un appareil d'imagerie, l'image comprenant au moins un domaine spatial ($D_i$) à l'intérieur duquel la concentration du traceur est homogène et au moins une région d'intérêt ($R_j$) à l'intérieur de laquelle la concentration du traceur est mesurée, **caractérisé en ce que** le code comprend des instructions pour :

- déterminer une matrice de transfert géométrique (W) dont les coefficients ($w_{i,j}$) sont représentatifs de la contribution des domaines spatiaux ($D_i$) à la mesure de la concentration du traceur dans les régions d'intérêt ($R_j$) ;
- optimiser les coefficients ($w_{i,j}$) de la matrice de transfert géométrique (W) par délimitation des régions d'intérêt ($R_j$) les meilleures en termes d'erreurs pour mesurer la concentration du traceur, la délimitation des régions d'intérêt ($R_j$) étant réalisée suivant une boucle itérative comprenant à chaque itération (k) les étapes suivantes :

- modification des régions d'intérêt ($R_j$); et
- calcul des coefficients ($w_{i,j}$) de la matrice de transfert géométrique (W) à partir des régions d'intérêt ($R_j$) modifiées ;

- choisir une matrice de transfert géométrique (W) optimisée parmi les matrices de transfert géométrique (W) calculées ; et
- estimer la concentration du traceur à partir de la matrice de transfert géométrique (W) optimisée,

lorsqu'il est exécuté par un système de traitement de données.

**17.** Dispositif destiné à estimer la concentration d'un traceur dans un ensemble de structures tissulaires comprenant au moins une structure tissulaire à partir d'une image de mesure de la concentration du traceur dans ledit ensemble de structures tissulaires obtenue par un appareil d'imagerie, l'image comprenant au moins un domaine spatial ($D_i$) à l'intérieur duquel la concentration du traceur est homogène et au moins une région d'intérêt ($R_j$) à l'intérieur de laquelle la concentration du traceur est mesurée, **caractérisé en ce qu'**il comprend :

- un appareil d'imagerie ; et
- un système de traitement de données comprenant :

- des moyens pour déterminer une matrice de transfert géométrique (W) dont les coefficients ($w_{i,j}$) sont représentatifs de la contribution des domaines spatiaux ($D_i$) à la mesure de la concentration du traceur dans les régions d'intérêt ($R_j$) ;
- des moyens pour optimiser les coefficients ($w_{i,j}$) de la matrice de transfert géométrique (W) par délimitation des régions d'intérêt ($R_j$) les meilleures en termes d'erreurs pour mesurer la concentration du traceur, la délimitation des régions d'intérêt ($R_j$) étant réalisée suivant une boucle itérative comprenant à chaque itération (k) les étapes suivantes :

- modification des régions d'intérêt ($R_j$) ; et
- calcul des coefficients ($w_{i,j}$) de la matrice de transfert géométrique (W) à partir des régions d'intérêt ($R_j$) modifiées ;

- des moyens pour choisir une matrice de transfert géométrique (W) optimisée parmi les matrices de transfert géométrique (W) calculées ; et
- des moyens pour estimer la concentration du traceur à partir de la matrice de transfert géométrique (W) optimisée.

**Patentansprüche**

**1.** Verfahren zur Schätzung der Konzentration eines Tracers in einer Anordnung von Gewebestrukturen, die mindestens eine Gewebestruktur enthält, aus einem Bild der Messung der Konzentration des Tracers in der Anordnung von Gewebestrukturen, das von einer bildgebenden Vorrichtung erhalten wird, wobei das Bild mindestens einen Raum-

bereich (D$_i$), in dessen Innerem die Konzentration des Tracers homogen ist, und mindestens einen Untersuchungsbereich (R$_i$), in dessen Innerem die Konzentration des Tracers gemessen wird, aufweist, **dadurch gekennzeichnet, dass** es folgende Schritte umfasst:

- Bestimmen einer geometrischen Übertragungsmatrix (W), deren Koeffizienten (w$_{ij}$) für den Anteil der Raumbereiche (D$_i$) an der Messung der Konzentration des Tracers in den Untersuchungsgebieten (R$_j$) repräsentativ sind;
- Optimieren der Koeffizienten (w$_{ij}$) der geometrischen Übertragungsmatrix (W) durch Abgrenzung der in Hinblick auf Fehler besten Untersuchungsbereiche (R$_j$), um die Konzentration des Tracers zu messen, wobei die Abgrenzung der Untersuchungsbereiche (R$_j$) gemäß einer iterativen Schleife realisiert wird, die bei jeder Iteration (k) die folgenden Schritte umfasst:

  - Modifizieren der Untersuchungsbereiche (Rj); und
  - Berechnen der Koeffizienten (w$_{ij}$) der geometrischen Übertragungsmatrix (W) ausgehend von den modifizierten Untersuchungsbereichen (R$_j$);

- Auswahl einer optimierten geometrischen Übertragungsmatrix (W) aus den berechneten geometrischen Übertragungsmatrizes (W); und
- Schätzen der Konzentration des Tracers aus der optimierten geometrischen Übertragungsmatrix (W).

2.  Verfahren nach Anspruch 1, **dadurch gekennzeichnet, dass** der Schritt des Modifizierens der Untersuchungsbereiche (R$_j$) die Zufügung und/oder den Ausschluss mindestens eines Bildelements (x) umfasst.

3.  Verfahren nach Anspruch 1 oder 2, **dadurch gekennzeichnet, dass** die iterative Schleife für die Abgrenzung der Untersuchungsbereiche (R$_j$) für jede Iteration (k) die folgenden Schritte umfasst:

    - Bestimmen einer Gesamtheit von Elementarmodifikationen ($\delta$), die jeweils darin besteht, mindestens ein Bildelement (x) den Untersuchungsbereichen (R$_j$) hinzuzufügen;
    - für jede Elementarmodifikation ($\delta$) Schätzen der Konzentration des Tracers in den durch die Elementarmodifikation ($\delta$) modifizierten Untersuchungsbereichen (R$_j$);
    - für jede Elementarmodifikation ($\delta$) Auswerten eines Kriteriums (h), das den Vergleich der geschätzten Konzentration des Tracers mit Konzentrationen des Tracers, die mindestens bei einer vorhergehenden Iteration geschätzt wurden, gestattet;
    - Auswahl der Elementarmodifikation ($\delta_{opt}$), die eine Schätzung der Konzentration des Tracers ergibt, die am nächsten an den bei den vorhergehenden Iterationen geschätzten Konzentrationen des Tracers liegt;
    - Vergleich des Kriteriums (h), das mit der ausgewählten Elementarmodifikation ($\delta_{opt}$) korrespondiert, mit einer vorbestimmten Schwelle (h$_{min}$); und
    - Anwenden der ausgewählten Elementarmodifikation ($\delta_{opt}$) oder nicht oder Anhalten der iterativen Schleife abhängig vom Ergebnis des Vergleichs des Kriteriums (h) mit der Schwelle (h$_{min}$).

4.  Verfahren nach einem beliebigen der Ansprüche 1 bis 3, **dadurch gekennzeichnet, dass** es einen Schritt der Planung der Bildelemente (x) in jedem Raumbereich (D$_i$) abhängig von Ordnungskriterien umfaßt, wodurch ihr Risiko des Einführens von Fehlern, die nicht auf Rauschen zurückzuführen sind, in der Schätzung der Konzentration des Tracers abgeschätzt werden kann.

5.  Verfahren nach Anspruch 4, **dadurch gekennzeichnet, dass** die Ordnungskriterien mindestens eines von drei Kriterien umfassen, wobei ein erstes Kriterium ($\alpha(x)$) zu definieren gestattet, ob die in dem Bildelement (x) enthaltene Konzentration von einem einzigen oder von mehreren unterschiedlichen Raumbereichen (D$_i$) herrührt, einem zweiten Kriterium ($\beta(x)$), das zu definieren gestattet, ob das Bildelement (x) zu dem Berechnen der nichtdiagonalen Elemente der geometrischen Übertragungsmatrix (W) beiträgt, und einem dritten Kriterium ($\gamma(x)$), das zu definieren gestattet, ob das Bildelement (x) zuverlässig für die Schätzung der Konzentration des Tracers ist.

6.  Verfahren nach Anspruch 5, **dadurch gekennzeichnet, dass** das erste Kriterium ($\alpha(x)$) die Messung der Homogenität der Konzentration des Tracers in der Nähe des Bildelements (x) gestattet, das zweite Kriterium ($\beta(x)$) die Messung des Anteils der Raumbereiche (D$_i$) an der Messung der Konzentration des Tracers in dem Bildelement (x) gestattet und das dritte Kriterium ($\gamma(x)$) aus einem probabilistischen Atlas herstammt.

7.  Verfahren nach einem beliebigen der Ansprüche 4 bis 6, **dadurch gekennzeichnet, dass** die iterative Schleife für die Abgrenzung der Untersuchungsbereiche ($R_j$) gemäß der Ordnung der Bildelemente (x), die bei dem Schritt der Planung erhalten wurde, realisiert wird.

8. Verfahren nach einem beliebigen der Ansprüche 4 bis 7, **dadurch gekennzeichnet, dass** es einen Schritt der Schätzung der Punktspreizfunktion (PSF) der bildgebenden Vorrichtung an jedem Punkt des Bildfeldes der bildgebenden Vorrichtung umfasst.

9. Verfahren nach Anspruch 8, **dadurch gekennzeichnet, dass** der Schritt der Schätzung der Punktspreizfunktion (PSF) die folgenden Schritte umfasst:

   - Messung der Punktspreizfunktion (PSF) an mehreren Punkten des Bildfeldes; und
   - Interpolieren und/oder Extrapolieren der erhaltenen Messungen.

10. Verfahren nach Anspruch 8 oder 9, **dadurch gekennzeichnet, dass** es einen Schritt der Schätzung einer Region-Spreizfunktion (RSF) für jeden Raumbereich ($D_i$) durch Faltung der Punktspreizfunktion (PSF) mit jedem Raumbereich ($D_i$) umfasst.

11. Verfahren nach einem beliebigen der Ansprüche 1 bis 10, **dadurch gekennzeichnet, dass** es einen Schritt der Berechnung der Größe der Untersuchungsbereiche ($R_j$) umfasst.

12. Verfahren nach Anspruch 11, **dadurch gekennzeichnet, dass** es einen Schritt der Abgrenzung der Raumbereiche ($D_i$) derart umfasst, dass Untersuchungsbereiche ($R_j$) einer maximalen Größe erhalten werden.

13. Verfahren nach Anspruch 11 oder 12 und einem beliebigen der Ansprüche 4 bis 7, zusammengenommen, **dadurch gekennzeichnet, dass** es einen Schritt der Optimierung der Ordnungskriterien derart umfasst, dass Untersuchungsbereiche ($R_j$) mit maximaler Größe erhalten werden.

14. Verfahren nach einem beliebigen der Ansprüche 1 bis 13, **dadurch gekennzeichnet, dass** das Bild der Messung der Konzentration des Tracers in der Gewebestruktur eine Sequenz von in Korrespondenz gesetzten dreidimensionalen Bildern ist, die mindestens ein dreidimensionales Bild umfasst, und dass die Bildelemente (x) Voxel sind.

15. Verfahren nach Anspruch 14, **dadurch gekennzeichnet, dass** das dreidimensionale Bild durch Positronen-Emissionstomografie erhalten wird.

16. Speichermedium, das einen Code zum Schätzen der Konzentration eines Tracers in einer Anordnung von Gewebestrukturen umfasst, die mindestens eine Gewebestruktur aufweist, aus einem Bild der Messung der Konzentration des Tracers in der Anordnung von Gewebestrukturen, das von einer bildgebenden Vorrichtung erhalten wird, wobei das Bild mindestens einen Raumbereich ($D_i$), in dessen Innerem die Konzentration des Tracers homogen ist, und mindestens einen Untersuchungsbereich ($R_j$), in dessen Innerem die Konzentration des Tracers gemessen wird, umfasst, **dadurch gekennzeichnet, dass** der Code Befehle umfasst zum:

   - Bestimmen einer geometrischen Übertragungsmatrix (W), deren Koeffizienten ($w_{i,j}$) für den Anteil der Raumbereiche ($D_i$) an der Messung der Konzentration des Tracers in den Untersuchungsbereichen ($R_j$) repräsentativ sind;
   - Optimieren der Koeffizienten ($w_{i,j}$) der geometrischen Übertragungsmatrix (W) durch Abgrenzung der in Hinblick auf Fehler besten Untersuchungsbereiche ($R_j$), um die Konzentration des Tracers zu messen, wobei die Abgrenzung der Untersuchungsbereiche ($R_j$) gemäß einer iterativen Schleife realisiert wird, die bei jeder Iteration (k) die folgenden Schritte umfasst:

      - Modifizieren der Untersuchungsbereiche ($R_j$); und
      - Berechnen der Koeffizienten ($w_{i,j}$) der geometrischen Übertragungsmatrix (W) ausgehend von den modifizierten Untersuchungsbereichen ($R_j$);

   - Wahl einer optimierten geometrischen Übertragungsmatrix (W) aus den berechneten geometrischen Übertragungsmatrizes (W); und
   - Schätzen der Konzentration des Tracers aus der optimierten geometrischen Übertragungsmatrix (W),

wenn es von einem Datenverarbeitungssystem durchgeführt wird.

**17.** Vorrichtung, vorgesehen zur Schätzung der Konzentration eines Tracers in einer Anordnung von Gewebestrukturen, die mindestens eine Gewebestruktur enthält, aus einem Bild einer Messung der Konzentration des Tracers in der Anordnung von Gewebestrukturen, das von einer bildgebenden Vorrichtung erhalten wird, wobei das Bild mindestens einen Raumbereich ($D_i$), in dessen Innerem die Konzentration des Tracers homogen ist, und mindestens einen Untersuchungsbereich ($R_i$), in dessen Innerem die Konzentration des Tracers gemessen wird, aufweist, **dadurch gekennzeichnet, dass** sie umfasst:

- eine bildgebende Vorrichtung; und
- ein System zur Datenverarbeitung umfassend:

- Mittel zum Bestimmen einer geometrischen Übertragungsmatrix (W), deren Koeffizienten ($w_{i,j}$) für den Anteil der Raumbereiche ($D_i$) an der Messung der Konzentration des Tracers in den Untersuchungsgebieten $R_j$) repräsentativ sind;
- Mittel zur Optimierung der Koeffizienten ($w_{i,j}$) der geometrischen Übertragungsmatrix (W) durch Abgrenzung von im Hinblick auf Fehler besten Untersuchungsbereichen ($R_j$), um die Konzentration des Tracers zu messen, wobei die Abgrenzung der Untersuchungsbereiche ($R_j$) gemäß einer iterativen Schleifen realisiert wird, die bei jeder Iteration (k) die folgenden Schritte umfasst:

- Modifizieren der Untersuchungsbereiche ($R_j$); und
- Berechnen der Koeffizienten ($w_{i,j}$) der geometrischen Übertragungsmatrix (W) ausgehend von den modifizierten Untersuchungsbereichen ($R_j$);

- Mittel zur Auswahl einer optimierten geometrischen Übertragungsmatrix (W) aus den berechneten geometrischen Übertragungsmatrizes (W); und
- Mittel zum Schätzen der Konzentration des Tracers aus der optimierten geometrischen Übertragungsmatrix (W).

**Claims**

**1.** A method for estimating the concentration of a tracer in a tissue structure assembly comprising at least one tissue structure, from a measurement image of the tracer concentration in said tissue structure assembly, which is obtained by an imaging apparatus, the image comprising at least one space domain ($D_i$) inside which the tracer concentration is homogenous and at least one region of interest ($R_i$) inside which the tracer concentration is measured, **characterized in that** it comprises the following steps:

- determining a geometric transfer matrix (W) having coefficients ($w_{i,j}$) representative of the contribution of the space domains ($D_i$) in the measurement of the tracer concentration in the regions of interest ($R_j$);
- optimizing the coefficients ($w_{i,j}$) of the geometric transfer matrix (W) by defining the best regions of interest ($R_j$) in terms of errors in order to measure the tracer concentration, the definition of the regions of interest ($R_j$) being carried out according to an iterative loop that includes the following steps upon each iteration (k):

- modifying the regions of interest ($R_j$); and
- calculating the coefficients ($w_{i,j}$) of the geometric transfer matrix (W) from the modified regions of interest ($R_j$);

- selecting an optimized geometric transfer matrix (W) among the calculated geometric transfer matrices (W); and
- estimating the tracer concentration from the optimized geometric transfer matrix (W).

**2.** The method according to claim 1, **characterized in that** the step for modifying the regions of interest ($R_j$) comprises the addition and/or exclusion of at least one image element (x).

**3.** The method according to claim 1 or 2, **characterized in that** the iterative loop for defining the regions of interest ($R_j$) comprises, for each iteration (k), the following steps:

- determining a set of elementary modifications ($\delta$) each consisting of adding at least one image element (x) to the regions of interest ($R_j$);
- estimating, for each elementary modification ($\delta$), the tracer concentration in the regions of interest ($R_j$) modified

by the elementary modification ($\delta$);

- evaluating, for each elementary modification ($\delta$), a criterion (h) making it possible to compare the estimated tracer concentration with the tracer concentrations estimated in at least one preceding iteration;

- selecting the elementary modification ($\delta_{opt}$) yielding a tracer concentration estimate closest to the tracer concentrations estimated in the preceding iterations;

- comparing the criterion (h) corresponding to the selected elementary modification ($\delta_{opt}$) with a predetermined threshold ($h_{min}$); and

- applying or not applying the selected elementary modification ($\delta_{opt}$) or stopping the iterative loop as a function of the result of the comparison of the criterion (h) with the threshold ($h_{min}$).

4. The method according to any one of claims 1 to 3, **characterized in that** it comprises a step for ordering image elements (x) in each space domain ($D_i$) as a function of order criteria making it possible to evaluate their risk of introducing errors not due to noise into the tracer concentration estimate.

5. The method according to claim 4, **characterized in that** the order criteria comprise at least one from amongst a first criterion ($\alpha(x)$) making it possible to define whether the concentration contained in the image element (x) comes from one or more different spatial domains ($D_i$), a second criterion ($\beta(x)$) making it possible to define whether the image element (x) participates in the calculation of the non-diagonal elements of the geometric transfer matrix (W), and a third criterion ($\gamma(x)$) making it possible to define whether the image element (x) is reliable for estimating the tracer concentration.

6. The method according to claim 5, **characterized in that** the first criterion ($\alpha(x)$) makes it possible to measure the homogeneity of the tracer concentration near the image element (x), the second criterion ($\beta(x)$) makes it possible to measure the contribution of the space domains ($D_i$) to the measurement of the tracer concentration in the image element (x), and the third criterion ($\gamma(x)$) comes from a probabilistic atlas.

7. The method according to any one of claims 4 to 6, **characterized in that** the iterative loop for defining the regions of interest ($R_j$) is carried out following the order of the image elements (x) obtained in the ordering step.

8. The method according to any one of claims 1 to 7, **characterized in that** it comprises a step for estimating the point spread function (PSF) of the imaging apparatus at any point of the imaging apparatus's field of view.

9. The method according to claim 8, **characterized in that** the step for estimating the point spread function (PSF) comprises the following steps:

- measuring the point spread function (PSF) at several points of the field of view; and
- interpolating and/or extrapolating the obtained measurements.

10. The method according to claim 8 or 9, **characterized in that** it comprises a step for estimating a region spread function (RSF) for each space domain ($D_i$) by convolution of the point spread function (PSF) with each space domain ($D_i$).

11. The method according to any one of claims 1 to 10, **characterized in that** it comprises a step for calculating the size of the regions of interest ($R_j$).

12. The method according to claim 11, **characterized in that** it comprises a step for delimiting space domains ($D_i$) so as to obtain regions of interest ($R_i$) with a maximum size.

13. The method according to claim 11 or 12 and any one of claims 4 to 7 considered together, **characterized in that** it comprises a step for optimizing order criteria so as to obtain regions of interest ($R_j$) with a maximum size.

14. The method according to any one of claims 1 to 13, **characterized in that** the measurement image of the tracer concentration in the tissue structure is a sequence of matched three-dimensional images and comprising at least one three-dimensional image, and **in that** the image elements (x) are voxels.

15. The method according to claim 14, **characterized in that** the three-dimensional image is obtained by positron emission tomography.

**16.** A storage medium comprising a code to estimate the concentration of a tracer in a tissue structure assembly comprising at least one tissue structure from a measurement image of the tracer concentration in said tissue structure assembly obtained by an imaging apparatus, the image comprising at least one space domain ($D_i$) inside which the tracer concentration is homogenous and at least one region of interest ($R_i$) inside which the tracer concentration is measured, **characterized in that** the code comprises instructions to:

- determine a geometric transfer matrix (W) having coefficients ($w_{i,j}$) representative of the contribution of the space domains ($D_i$) in the measurement of the tracer concentration in the regions of interest ($R_j$);
- optimize the coefficients ($w_{i,j}$) of the geometric transfer matrix (W) by defining the best regions of interest ($R_j$) in terms of errors in order to measure the tracer concentration, the definition of the regions of interest ($R_j$) being carried out according to an iterative loop that includes the following steps upon each iteration (k):

- modifying the regions of interest ($R_j$); and
- calculating the coefficients ($w_{i,j}$) of the geometric transfer matrix (W) from the modified regions of interest ($R_j$);

- select an optimized geometric transfer matrix (W) among the calculated geometric transfer matrices (W); and
- estimate the tracer concentration from the optimized geometric transfer matrix (W), when it is executed by a data processing system.

**17.** A device intended to estimate the concentration of a tracer in a tissue structure assembly comprising at least one tissue structure from a measurement image of the tracer concentration in said tissue structure assembly obtained by an imaging apparatus, the image comprising at least one space domain ($D_i$) inside which the tracer concentration is homogenous and at least one region of interest ($R_j$) inside which the tracer concentration is measured, **characterized in that** it comprises:

- an imaging apparatus; and
- a data processing system comprising:
- means for determining a geometric transfer matrix (W) having coefficients ($w_{i,j}$) representative of the contribution of the space domains ($D_i$) in the measurement of the tracer concentration in the regions of interest ($R_j$);
- means for optimizing the coefficients ($w_{i,j}$) of the geometric transfer matrix (W) by defining the best regions of interest ($R_j$) in terms of errors in order to measure the tracer concentration, the definition of the regions of interest ($R_j$) being carried out according to an iterative loop that includes the following steps upon each iteration (k):

- modifying the regions of interest ($R_j$); and
- calculating the coefficients ($w_{i,j}$) of the geometric transfer matrix (W) from the modified regions of interest ($R_j$);

- means for selecting an optimized geometric transfer matrix (W) among the calculated geometric transfer matrices (W); and
- means for estimating the tracer concentration from the optimized geometric transfer matrix (W).

## FIG.1

## FIG.2

## FIG.3

FIG.4

FIG.5

## FIG.6

FIG.7A

FIG.7B

**Simulations: Cinétique du poumon**

TAC moyenne
TAC corrigée par GTM
TAC corrigée par LMA-GTM
TAC vraie

Activité (Bq/cm$^3$)

Temps (min)

## FIG.8A

**Données expérimentales: Cinétique de tumeur**

Moyenne
GTM
LMA-GTM
Vraie

Activité (Bq/cm$^3$)

Temps (s)

## FIG.8B

## FIG.9A

## FIG.9B

## FIG.10A

## FIG.10B

FIG.11A

FIG.11B

EP 2 345 007 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Correction for Partial Volume Effects in PET : Principle and Validation. *The Journal of Nuclear Medicine,* 1998, vol. 39 (5), 904-911
- **FROUIN et al.** Correction of Partial-Volume Effect for PET Striatal Imaging : Fast Implementation and Study of Robustness. *The Journal of Nuclear Medicine,* 2002, vol. 43 (12), 1715-1726
- **MAROY et al.** Segmentation of Rodent Whole-Body Dynamic PET Images: An Unsupervised Method Based on Voxel Dynamics. *IEEE Trans. Med. Imaging,* 2008